(19)

(11) **EP 2 259 478 A1**

(12) **EUROPEAN PATENT APPLICATION**

(43) Date of publication:
**08.12.2010 Bulletin 2010/49**

(51) Int Cl.:
**H04L 1/18** (2006.01)     **H04L 27/34** (2006.01)

(21) Application number: **10178455.1**

(22) Date of filing: **18.10.2002**

(84) Designated Contracting States:
**AT BE BG CH CY CZ DE DK EE ES FI FR GB GR
IE IT LI LU MC NL PT SE SK TR**

(62) Document number(s) of the earlier application(s) in
accordance with Art. 76 EPC:
**08000127.4 / 1 903 711**
**02790298.0 / 1 552 639**

(71) Applicant: **Panasonic Corporation
Kadoma-shi
Osaka 571-8501 (JP)**

(72) Inventors:
• **Wengerter, Christian
63225, Langen (DE)**

• **Golitscheck Edler von Elbwart, Alexander
63225, Langen (DE)**
• **Seidel, Eiko
63225, Langen (DE)**

(74) Representative: **Grünecker, Kinkeldey,
Stockmair & Schwanhäusser
Anwaltssozietät
Leopoldstrasse 4
80802 München (DE)**

Remarks:
This application was filed on 22-09-2010 as a
divisional application to the application mentioned
under INID code 62.

(54) **Constellation rearrangement for ARQ transmit diversity schemes**

(57)     An ARQ (re-) transmission method of transmitting data in a wireless communication system wherein data packets are transmitted from a transmitter to a receiver, using a first transmission and a second transmission based on a repeat request. The method comprises the steps of modulating data at the transmitter using a first signal constellation pattern to obtain a first data symbol. The first data symbol is transmitted as the first transmission to the receiver using a first diversity branch. Further, the data is modulated at the transmitter using a second signal constellation pattern to obtain a second data symbol. Then, the second data symbol is transmitted as the second transmission to the receive over a second diversity branch. Finally, the received first and second data symbol data symbol are diversity combined at the receiver. The invention further relates to a transmitter and a receiver embodied to carry out the method of the invention.

FIG. 4

**Description**

The present invention relates generally to ARQ (re-) transmission techniques in wireless communication systems and in particular to a method, transceiver and receiver using transmit diversity schemes wherein data packets are transmitted using a first and a second transmission based on a repeat request, and the bit-to-symbol mapping is performed differently for different transmitted diversity branches. The invention is particularly applicable to systems with unreliable and time-varying channel conditions resulting in an improved performance avoiding transmission errors.

There exist several well known transmit diversity techniques wherein one or several redundancy versions relating to identical data are transmitted on several (at least two) diversity branches "by default" without explicitly requesting (by a feedback channel) further diversity branches (as done in an ARQ scheme by requesting retransmissions). For example the following schemes are considered as transmit diversity:

| | | |
|---|---|---|
| ■ | Site Diversity: | The transmitted signal originates from different sites, e.g. different base stations in a cellular environment. |
| ■ | Antenna Diversity: | The transmitted signal originates from different antennas, e.g. different antennas of a multi-antenna base station. |
| ■ | Polarization Diversity: | The transmitted signal is mapped onto different polarizations. |
| ■ | Frequency Diversity: | The transmitted signal is mapped e.g. on different carrier frequencies or on different frequency hopping sequences. |
| ■ | Time Diversity: | The transmitted signal is e.g. mapped on different interleaving sequences. |
| ■ | Multicode Diversity: | The transmitted signal is mapped on different codes in e.g. a CDMA (Code Division Multiple Access) system. |

There are known several diversity combining techniques. The following three techniques are the most common ones:

| | | |
|---|---|---|
| ■ | Selection Combining: | Selecting the diversity branch with the highest SNR for decoding, ignoring the remaining ones. |
| ■ | Equal Gain Combining: | Combining received diversity branches with ignoring the differences in received SNR. |
| ■ | Maximal Ratio Combining: | Combining received diversity branches taking the received *SNR* of each diversity branch into account. The combining can be performed at bit-level (e.g. *LLR*) or at modulation symbol level. |

Furthermore, a common technique for error detection/correction is based on Automatic Repeat request (ARQ) schemes together with Forward Error Correction (FEC), called hybrid ARQ (HARQ). If an error is detected within a packet by the Cyclic Redundancy Check (CRC), the receiver requests the transmitter to send additional information (retransmission) to improve the probability to correctly decode the erroneous packet.

In WO-02/067491 A1 a method for hybrid ARQ transmissions has been disclosed which averages the bit reliabilities over successively requested retransmissions by means of signal constellation rearrangement.

As shown therein, when employing higher order modulation formats (e.g. *M*-PSK, *M*-QAM with $\log_2(M) > 2$), where more than 2 bits are mapped onto one modulation symbol, the bits have different reliabilities depending on the chosen mapping. This leads for most FEC (e.g. Turbo Codes) schemes to a degraded decoder performance compared to an input of more equally distributed bit reliabilities.

In conventional communication systems the modulation dependent variations in bit reliabilities are not taken into account and, hence, usually the variations remain after combining the diversity branches at the receiver.

The object of the invention is to provide an ARQ (re-) transmission method, a transmitter and a receiver which show an improved performance with regard to transmission errors. This object is solved by a method, transmitter and receiver as set forth in the independent claims.

The invention is based on the idea to improve the performance at the receiver by applying different signal constellation mappings to the available distinguishable transmit diversity branches and ARQ (re-) transmissions. The invention is applicable to modulation formats, where more than 2 bits are mapped onto one modulation symbol, since this implies a variation in reliabilities for the bits mapped onto the signal constellation. The variations depend on the employed mapping and on the actually transmitted content of the bits.

Depending on the employed modulation format and the actual number of bits mapped onto a single modulation symbol, for a given arbitrary number (N > 1) of available diversity branches and required retransmissions the quality of the averaging process is different. Averaging in the sense of the present invention is understood as a process of reducing the differences in mean combined bit reliabilities among the different bits of a data symbol. Although it might be that only after using several diversity branches or paths a perfect averaging with no remaining differences is achieved, averaging means in the context of the document any process steps in the direction of reducing the mean combined bit reliability differences. Assuming on average an equal *SNR* for all available diversity branches and ARQ transmissions, for 16-QAM 4 mappings (4 diversity branches) would be needed to perfectly average out the reliabilities for all bits mapped on any symbol. However, not always the number of available transmit diversity branches and/or the number of ARQ transmissions is sufficient to perform a perfect averaging. Hence, the averaging should then be performed on a best effort basis as shown in the example below.

The present invention will be more readily understood from the following detailed description of preferred embodiments with reference to the accompanying figures which show:

FIG. 1    an example for a 16-QAM signal constellation;

FIG. 2    an example for a different mapping of a 16-QAM signal constellation;

FIG. 3    two further examples of 16-QAM signal constellations;

FIG.4    an exemplary embodiment of a communication system according to the present invention; and

FIG. 5    details of a table for storing a plurality of signal constellation patterns.

The method described here performs a combined averaging of bit reliabilities considering the transmit diversity branches. The following detailed description is shown for a square 16-QAM with Gray mapping. However, without loss of generality the shown example is extendable to other *M*-QAM and *M*-PSK (with $\log_2(M) > 2$) formats. Moreover, the examples are shown for transmit diversity and HARQ schemes transmitting an identical bit-sequence on both branches and all HARQ transmissions (single redundancy version scheme). Then again, an extension to a transmit diversity and HARQ scheme transmitting only partly identical bits on the diversity branches and HARQ transmissions can be accomplished. An example for a system using multiple redundancy versions is described in copending EP 01127244, filed on November 16, 2001. Assuming a Turbo encoder, the systematic bits can be averaged on a higher level as compared to the parity bits.

Although the below examples give details of an embodiment with the special case of hybrid ARQ (HARQ), it should be noted that the inclusion of an FEC code is not necessary for the present invention to show performance gains. However the highest performance gains can be achieved with the use of HARQ.

The following example describes a method with two diversity branches and HARQ.

1st Transmission:

Assuming a transmit diversity scheme with two generated diversity branches, which are distinguishable at the receiver (e.g. by different spreading or scrambling codes in a CDMA system) and a transmission of the same redundancy version, usually the received diversity branches are combined at the receiver before applying the FEC decoder. A common combining technique is the maximal ratio combining, which can be achieved by adding the calculated log-likelihood-ratios *LLR*s from each individual received diversity branch.

The log-likelihood-ratio *LLR* as a soft-metric for the reliability of a demodulated bit b from a received modulation symbol $r = x + \mathrm{j}y$ is defined as follows:

$$LLR \quad (b) = \ln \left[ \frac{\Pr \{b = 1 | r\}}{\Pr \{b = 0 | r\}} \right] \tag{1}$$

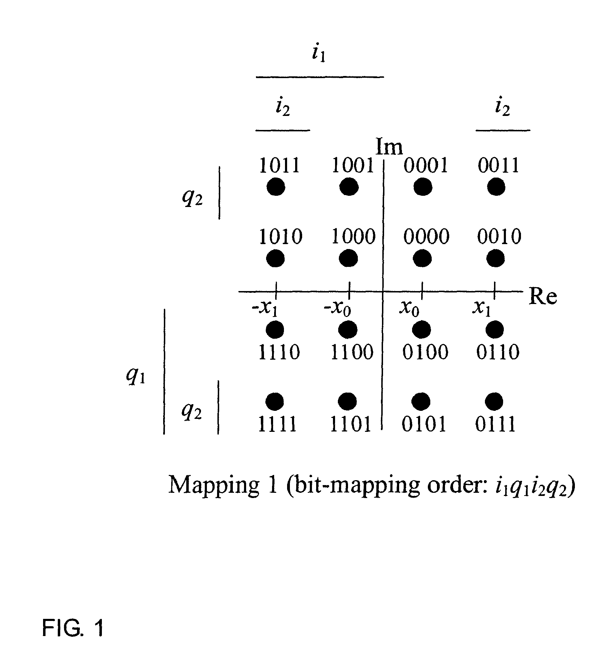

As can be seen from Figure 1 (bars indicate rows/columns for which the respective bit equals 1), the mappings of the in-phase component bits and the quadrature component bits on the signal constellation are orthogonal (for *M*-PSK the *LLR* calculation cannot be simplified by separating into complex components, however the general procedure of bit-reliability averaging is similar). Therefore, it is sufficient to focus on the in-phase component bits $i_1$ and $i_2$. The same conclusions apply then for $q_1$ and $q_2$.

Assuming that Mapping 1 from Figure 1 is applied for the bit-to-symbol mapping for the 1st diversity branch, the log-likelihood-ratio *LLR* of the most significant bit (MSB) $i_1$ and the least significant bit (LSB) $i_2$ yields the following equations for a Gaussian channel:

$$LLR\ (i_1) = \ln\left[\frac{e^{-K(x+x_0)^2} + e^{-K(x+x_1)^2}}{e^{-K(x-x_0)^2} + e^{-K(x-x_1)^2}}\right] \quad (2)$$

$$LLR\ (i_2) = \ln\left[\frac{e^{-K(x-x_1)^2} + e^{-K(x+x_1)^2}}{e^{-K(x-x_0)^2} + e^{-K(x+x_0)^2}}\right] \quad (3)$$

where $x$ denotes the in-phase component of the normalized received modulation symbol $r$ and $K$ is a factor proportional to the signal-to-noise ratio. Under the assumption of a uniform signal constellation ($x_1 = 3x_0$) equations (2) and (3) can be fairly well approximated, as shown in S. Le Goff, A. Glavieux, C. Berrou, "Turbo-Codes and High Spectral Efficiency Modulation," IEEE SUPERCOMM/ICC '94, Vol. 2 , pp. 645 -649 ,1994, and Ch. Wengerter, A. Golitschek Edler von Elbwart, E. Seidel, G. Velev, M.P. Schmitt, "Advanced Hybrid ARQ Technique Employing a Signal Constellation Rearrangement," IEEE Proceedings of VTC 2002 Fall, Vancouver, Canada, September 2002, by

$$LLR\ (i_1) \approx -4Kx_0 x \quad (4)$$

$$LLR\ (i_2) \approx -4Kx_0 \left(2x_0 - |x|\right) \quad (5)$$

The mean *LLR* for $i_1$ and $i_2$ for a given transmitted modulation symbol yields the values given in (substituting $4Kx_0^2$ by $\Lambda$). Mean in this sense, refers to that the mean received value for a given transmitted constellation point, exactly matches this transmitted constellation point. Individual samples of course experience noise according to the parameter K. However, for a Gaussian channel the mean value of the noise process is zero. In case of transmitted modulation symbols $0q_1 1 q_2$ and $1 q_1 1 q_2$, where $q_1$ and $q_2$ are arbitrary, the magnitude of the mean *LLR* ($i_1$) is higher than of the mean *LLR* ($i_2$). This means that the *LLR* for the MSB $i_1$ depends on the content of the LSB $i_2$; e.g. in Figure 1 $i_1$ has a higher mean reliability in case the logical value for $i_2$ equals 1 (leftmost and rightmost columns). Hence, assuming a uniform distribution of transmitted modulation symbols, on average 50 % of the MSBs $i_1$ have about three times the magnitude in *LLR* of $i_2$.

Table 1. Mean *LLR*s for bits mapped on the in-phase component of the signal constellation for Mapping 1 in Figure 1 according to equations (4) and (5).

| Symbol $(i_1 q_1 i_2 q_2)$ | Mean value of $x$ | Mean $LLR$ ($i_1$) | Mean $LLR$ ($i_2$) |
|---|---|---|---|
| $0q_1 0q_2$ | $x_0$ | $-4Kx_0^2 = -\Lambda$ | $-4Kx_0^2 = -\Lambda$ |

(continued)

| Symbol $(i_1q_1i_2q_2)$ | Mean value of $x$ | Mean $LLR$ $(i_1)$ | Mean $LLR$ $(i_2)$ |
|---|---|---|---|
| $0q_11q_2$ | $x_1$ | $-12Kx_0^2 = -3\Lambda$ | $4Kx_0^2 = \Lambda$ |
| $1q_10q_2$ | $-x_0$ | $4Kx_0^2 = \Lambda$ | $-4Kx_0^2 = -\Lambda$ |
| $1q_11q_2$ | $-x_1$ | $12Kx_0^2 = 3\Lambda$ | $4Kx_0^2 = \Lambda$ |

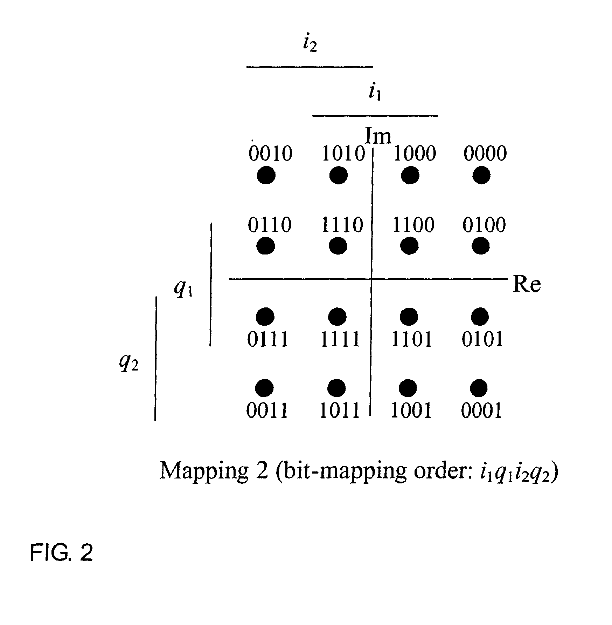

If now adding a 2nd transmit diversity branch transmitting e.g. an identical bit sequence prior art schemes would employ an identical mapping to the 1st diversity branch. Here, it is proposed to employ a 2nd signal constellation mapping (Mapping 2) according to Figure 2, which yields the mean $LLR$s given in Table 1.

Table 2. Mean $LLR$s for bits mapped on the in-phase component of the signal constellation for Mapping 2 in Figure 2.

| Symbol $(i_1q_1i_2q_2)$ | Mean value of $x$ | Mean $LLR$ $(i_1)$ | Mean $LLR$ $(i_2)$ |
|---|---|---|---|
| $0q_10q_2$ | $x_0$ | $-\Lambda$ | $-3\Lambda$ |
| $0q_11q_2$ | $x_1$ | $-\Lambda$ | $3\Lambda$ |
| $1q_10q_2$ | $-x_0$ | $\Lambda$ | $-\Lambda$ |
| $1q_11q_2$ | $-x_1$ | $\Lambda$ | $\Lambda$ |

Comparing now the soft-combined $LLR$s of the received diversity branches applying the constellation rearrangement (Mapping 1+2) and applying the identical mappings (Mapping 1 +1, prior art), it can be observed from Table 3 that the combined mean $LLR$ values with applying the constellation rearrangement have a more uniform distribution (Magnitudes: $4 \times 4\Lambda$ and $4 \times 2\Lambda$ instead of $2 \times 6\Lambda$ and $6 \times 2\Lambda$). For most FEC decoders (e.g. Turbo Codes and Convolutional Codes) this leads to a better decoding performance. Investigations have revealed that in particular Turbo encoding/ decoding systems exhibit a superior performance. It should be noted, that the chosen mappings are non exhaustive and more combinations of mappings fulfilling the same requirements can be found.

Table 3. Mean $LLR$s (per branch) and combined mean $LLR$s for bits mapped on the in-phase component of the signal constellation for the diversity branches when employing Mapping 1 and 2 and when employing 2 times Mapping 1.

| Transmit Diversity Branch | Symbol $(i_1q_1i_2q_2)$ | Constellation Rearrangement (Mapping 1+2) | | Prior Art No Rearrangement (Mapping 1+1) | |
|---|---|---|---|---|---|
| | | Mean $LLR$ $(i_1)$ | Mean $LLR$ $(i_2)$ | Mean $LLR$ $(i_1)$ | Mean $LLR$ $(i_2)$ |
| 1 | $0q_10q_2$ | $-\Lambda$ | $-\Lambda$ | $-\Lambda$ | $-\Lambda$ |
| | $0q_11q_2$ | $-3\Lambda$ | $\Lambda$ | $-3\Lambda$ | $\Lambda$ |
| | $1q_10q_2$ | $\Lambda$ | $-\Lambda$ | $\Lambda$ | $-\Lambda$ |
| | $1q_11q_2$ | $3\Lambda$ | $\Lambda$ | $3\Lambda$ | $\Lambda$ |
| 2 | $0q_10q_2$ | $-\Lambda$ | $-3\Lambda$ | $-\Lambda$ | $-\Lambda$ |
| | $0q_11q_2$ | $-\Lambda$ | $3\Lambda$ | $-3\Lambda$ | $\Lambda$ |
| | $1q_10q_2$ | $\Lambda$ | $-\Lambda$ | $\Lambda$ | $-\Lambda$ |
| | $1q_11q_2$ | $\Lambda$ | $\Lambda$ | $3\Lambda$ | $\Lambda$ |
| Combined 1+2 | $0q_10q_2$ | $-2\Lambda$ | $-4\Lambda$ | $-2\Lambda$ | $-2\Lambda$ |
| | $0q_11q_2$ | $-4\Lambda$ | $-4\Lambda$ | $-6\Lambda$ | $2\Lambda$ |
| | $1q_10q_2$ | $2\Lambda$ | $-2\Lambda$ | $2\Lambda$ | $-2\Lambda$ |
| | $1q_11q_2$ | $4\Lambda$ | $2\Lambda$ | $6\Lambda$ | $2\Lambda$ |

2nd and further Transmissions:

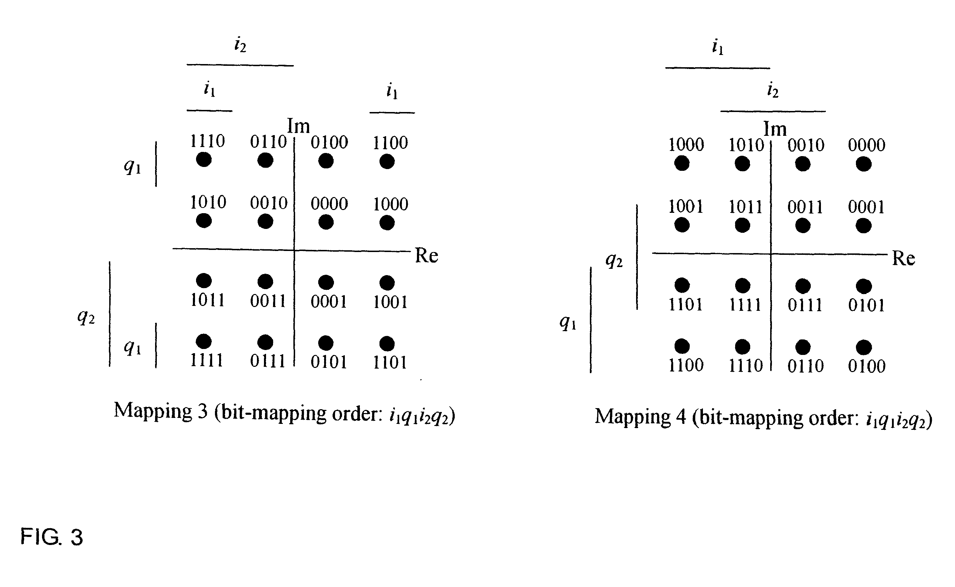

In case the 1st transmission has not been successfully decoded the receiver requests a retransmission (2nd transmission). Assuming for 2nd transmission also 2 transmit diversity branches are available, the 2 additional mappings (mapping 3 and mapping 4 in Figure 3) are employed to further improve the averaging of the bit reliabilities as shown in Table 4. In this example (assuming an equal *SNR* for all received signals) the averaging is performed perfectly after receiving 2 transmit diversity branches times 2 transmissions (possibility to employ 4 different mappings - sufficient for 16-QAM). Table 4 compares the *LLR*s with and without applying the proposed Constellation Rearrangement. Having a closer look at the combined *LLR*s, it can be seen that with application of the Constellation Rearrangement the magnitude for all bit reliabilities results in $6\Lambda$.

It should be noted again, that the chosen mappings are non exhaustive and more combinations of mappings fulfilling the same requirements can be found.

Table 4. Mean *LLR*s (per branch) and combined mean *LLR*s for bits mapped on the in-phase component of the signal constellation for the diversity branches and (re- ) transmissions when employing Mappings 1 to 4 and when employing 4 times Mapping 1.

| Transmit Diversity Branch | Transmission Number | Symbol $(i_1q_1/_2q_2)$ | Constellation Rearrangement (Mapping 1+2+3+4) | | Prior Art No Rearrangement (Mapping 1+1+1+1) | |
|---|---|---|---|---|---|---|
| | | | Mean *LLR* $(i_1)$ | Mean *LLR* $(i_2)$ | Mean *LLR* $(i_1)$ | Mean *LLR* $(i_2)$ |
| 1 | 1 | $0q_10q_2$ | $-\Lambda$ | $-\Lambda$ | $-\Lambda$ | $-\Lambda$ |
| | | $0q_11q_2$ | $-3\Lambda$ | $\Lambda$ | $-3\Lambda$ | $\Lambda$ |
| | | $1q_10q_2$ | $\Lambda$ | $-\Lambda$ | $\Lambda$ | $-\Lambda$ |
| | | $1q_11q_2$ | $\Lambda$ | $\Lambda$ | $3\Lambda$ | $\Lambda$ |
| 2 | 1 | $0q_10q_2$ | $-\Lambda$ | $-3\Lambda$ | $-\Lambda$ | $-\Lambda$ |
| | | $0q_11q_2$ | $-\Lambda$ | $3\Lambda$ | $-3\Lambda$ | $\Lambda$ |
| | | $1q_10q_2$ | $\Lambda$ | $-\Lambda$ | $\Lambda$ | $-\Lambda$ |
| | | $1q_11q_2$ | $\Lambda$ | $\Lambda$ | $3\Lambda$ | $\Lambda$ |
| 3 | 2 | $0q_10q_2$ | $\Lambda$ | $-\Lambda$ | $-\Lambda$ | $-\Lambda$ |
| | | $1q_11q_2$ | $\Lambda$ | $\Lambda$ | $-3\Lambda$ | $\Lambda$ |
| | | $1q_10q_2$ | $\Lambda$ | $-3\Lambda$ | $\Lambda$ | $-\Lambda$ |
| | | $1q_11q_2$ | $\Lambda$ | $3\Lambda$ | $3\Lambda$ | $\Lambda$ |
| 4 | 2 | $1q_10q_2$ | $3\Lambda$ | $-\Lambda$ | $-\Lambda$ | $-\Lambda$ |
| | | $1q_11q_2$ | $\Lambda$ | $\Lambda$ | $-3\Lambda$ | $\Lambda$ |
| | | $1q_10q_2$ | $\Lambda$ | $-\Lambda$ | $\Lambda$ | $-\Lambda$ |
| | | $1q_11q_2$ | $\Lambda$ | $\Lambda$ | $3\Lambda$ | $\Lambda$ |
| Combined 1+2+3+4 | | $1q_10q_2$ | $6\Lambda$ | $-6\Lambda$ | $-4\Lambda$ | $-4\Lambda$ |
| | | $1q_11q_2$ | $-6\Lambda$ | $6\Lambda$ | $-12\Lambda$ | $4\Lambda$ |
| | | $1q_10q_2$ | $6\Lambda$ | $-6\Lambda$ | $4\Lambda$ | $-4\Lambda$ |
| | | $1q_11q_2$ | $6\Lambda$ | $6\Lambda$ | $12\Lambda$ | $4\Lambda$ |

If the constellation rearrangement is performed by applying different mapping schemes, one would end up in employing a number of different mappings as given in Figure 1, Figure 2 and Figure 3. If the identical mapper (e.g. Figure 1) should be kept for all transmit diversity branches, e.g. mapping 2 can be obtained from mapping 1 by the following operations:

- exchange positions of original bits $i_1$ and $i_2$
- exchange positions of original bits $q_1$ and $q_2$
- logical bit inversion of original bits $i_1$ and $q_1$

Alternatively, those bits that end in positions 1 and 2 can also be inverted (resulting in a different mapping with an identical bit-reliability characteristics).

Therefore, the following table provides an example how to obtain mappings 1 to 4 (or mappings with equivalent bit reliabilities for $i_1$, $i_2$, $q_1$ and $q_2$), where the bits always refer to the first transmission, and a long dash above a character denotes logical bit inversion of that bit:

Table 5. Alternative implementation of the Constellation Rearrangement by interleaving (intra-symbol interleaving) and logical inversion of bits mapped onto the modulation symbols.

| Mapping No. | Interleaver and Inverter functionality |
|:---:|:---:|
| 1 | $i_1 q_1 i_2 q_2$ |
| 2 | $\bar{i}_2\bar{q}_2 i\bar{q}_1$ or $i_2\bar{q}_2 i_1\bar{q}_1$ |
| 3 | $\bar{i}_2\bar{q}_2 i_1 q_1$ or $i_2 q_2 i_1 q_1$ |
| 4 | $i_1 q_1\bar{i}_2\bar{q}_2$ or $\bar{i}_1\bar{q}_1 i_2\bar{q}_2$ |

Generally at least 2 different mappings should be employed for $N > 1$ diversity branches, where the order and the selection of the mappings is irrelevant, as long as the bit-reliability averaging process, meaning the reduction in differences in bit reliabilities) is maintained.

Preferred realizations in terms of number of employed mappings

○ $M$-QAM

- Employing $\log_2(M)$ different mappings
- Employing $\log_2(M)/2$ different mappings

○ $M$-PSK

- Employing $\log_2(M)$ different mappings
- Employing $\log_2(M)/2$ different mappings
- Employing $2\log_2(M)$ different mappings

The applied signal constellation mappings for modulation at the transmitter and demodulation at the receiver need to match for each individual transmit diversity branch. This can be achieved by appropriate signalling of parameters indicating the proper mapping or combination of mappings to be applied for the diversity branches and HARQ transmissions. Alternatively the definition of the mappings to be applied for transmit diversity branches and HARQ transmissions may be system predefined.

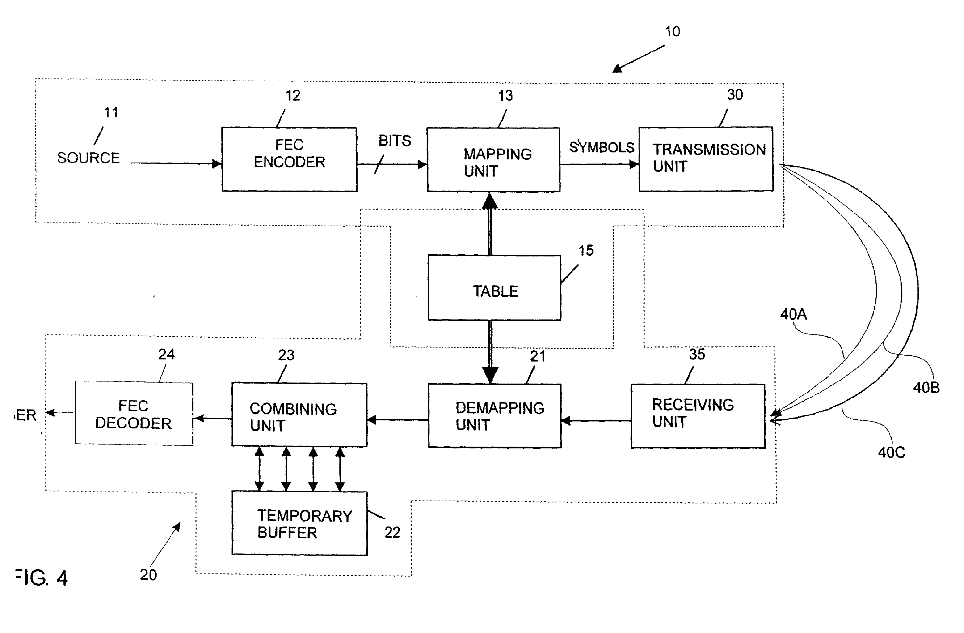

Figure 4 shows an exemplary embodiment of a communication system according to the present invention. More specifically, the communication system comprises a transmitter 10 and a receiver 20 which communicate through a communication channel consisting of a plurality of diversity branches 40A, 40B and 40C. Although three diversity branches are illustrated in the figure, it becomes clear to a person skilled in the art that an arbitrary number of branches may be chosen. From a data source 11, data packets are supplied to a FEC encoder 12, preferably a FEC Turbo encoder, where redundancy bits are added to correct errors. The bits output from the FEC encoder are subsequently supplied to a mapping unit 13 acting as a modulator to output symbols formed according to the applied modulation scheme stored as a constellation pattern in a table 15. Subsequently the data symbols are applied to a transmission unit 30 for transmission over the branches 40A - C. The receiver 20 receives the data packets by the receiving unit 35. The bits are then input into a demapping unit 21 which acts as a demodulator using the same signal constellation pattern stored in the table 15 which was used during the modulation of these bits.

The demodulated data packets received over one diversity branch are stored in a temporary buffer 22 for subsequent combining in a combining unit 23 with the data packets received over at least one other diversity branch.

A retransmission is launched by an automatic repeat request issued by an error detector (not shown) with the result that an identical data packet is transmitted from the transmitter 10. In the combining unit 23, the previously received erroneous data packets are soft-combined with the retransmitted data packets. Then a decoder decodes the bits and output a measure for the transmission quality, e.g. the bit-error-rate BER.

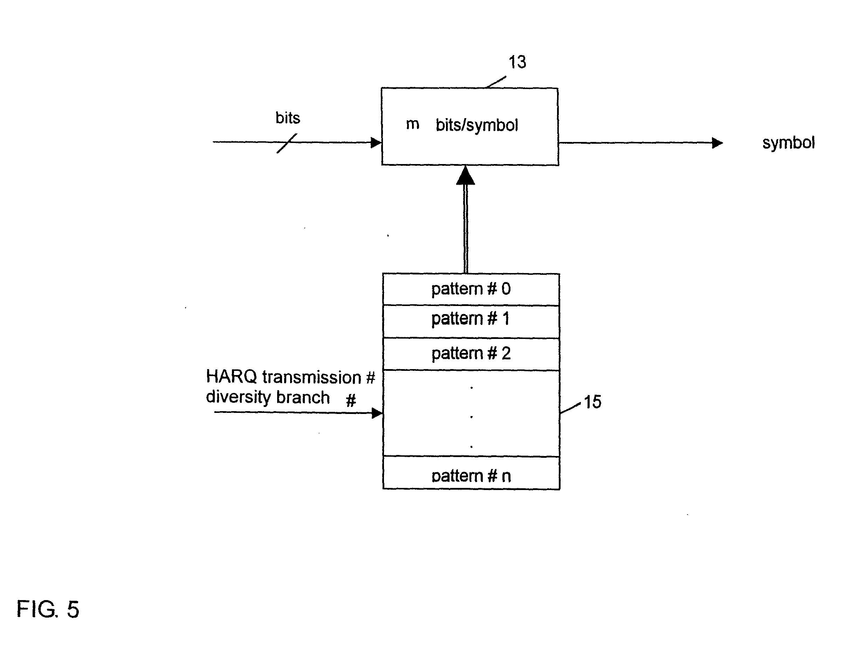

As illustrated in figure 5, table 15 stores a plurality of signal constellation patterns #0..#n which are selected for the individual transmissions over the individual diversity branches and HARQ transmissions according to a predetermined scheme. The scheme, i.e. the sequence of signal constellation patterns used for modulating/demodulating are either pre-stored in the transmitter and the receiver or are signalled by transmitter to the receiver prior to usage.

According to an illustrative embodiment of the present invention concerning an ARQ (re-) transmission method in a wireless communication system, data packets are transmitted from a transmitter to a receiver, using a first transmission and at least a second transmission based on a repeat request comprising the steps of modulating data at the transmitter using a first signal constellation pattern to obtain a first data symbol, performing the first transmission by transmitting the first data symbol to the receiver over a first diversity branch; modulating said data at the transmitter using a second signal constellation pattern to obtain a second data symbol; performing the second transmission by transmitting the second data symbol to the receiver over a second diversity branch; demodulating the received first and second data symbol at the receiver using the first and second signal constellation pattern respectively, and diversity combining the demodulated data.

According to the further embodiment of the method, the data to be transmitted contains at least one data packet comprising a plurality of data bits which are encoded using a forward error correction (FEC) scheme prior to modulation.

According to the further embodiment of the method, the employed encoding scheme is a Turbo coding scheme.

According to the further embodiment of the method, the employed modulation scheme is a higher order modulation scheme such as M-PSK, M-QAM with $\log2 (M) > 2$ wherein the data bits mapped onto the data symbols have different bit reliabilities depending on the chosen mapping.

According to the further embodiment of the method, the modulation pattern is 16 QAM and a number of $\log2 (M)$ signal constellation patterns are used.

According to the further embodiment of the method, the signal constellation pattern for the first and second diversity branches are selected such that after combining the data bits, the differences in magnitude among the combined bit reliabilities are reduced.

According to the further embodiment of the method, the data for transmission is modulated using a single redundancy version scheme with an identical data bit sequence.

According to the further embodiment of the method, the data for transmission is modulated using a multiple redundancy version scheme of partly identical bits.

According to the further embodiment of the method, wherein the first and second signal constellation patterns are pre-stored in a memory table.

According to the further embodiment of the method, the first and second signal constellation patterns are signaled to the receiver.

According to the further embodiment of the method, the properties of the first and second signal constellation patterns are obtained by interleaving the positions of and/or inverting the bit values of the bits mapped onto the signal constellation patterns. According to the further embodiment of the method, the interleaving is performed with symbols resulting in an intra-symbol interleaving.

According to the further embodiment of the method, the data is transmitted with a plurality of redundancy versions, and the transmitted bits comprise systematic and parity bits and the systematic bits are included in each redundancy version.

According to the further embodiment of the method, the combined mean bit reliabilities for the systematic bits are higher than that of the parity bits.

According to the further embodiment of the method, the first transmission comprises using the first and a third signal constellation pattern and transmitting the data modulated with the first and third signal constellation pattern over the first and a third diversity branch.

According to the further embodiment of the method, the second transmission comprises using the second and a fourth signal constellation pattern and transmitting the data modulated with the second and fourth signal constellation pattern over the second and a fourth diversity branch.

According to an illustrative embodiment of the invention concerning a transmitter for ARQ (re-) transmission of data in a wireless communication system, data packets are transmitted to a receiver using a first transmission and at least a second transmission based on a repeat request received from a receiver, comprising a mapping unit for modulating data using a first signal constellation pattern to obtain a first data symbol; a transmitting unit for performing the first transmission by transmitting the first data symbol using a first diversity branch; said mapping unit for modulating said data using a second signal constellation pattern to obtain a second data symbol; and said transmitting means for performing the second transmission by transmitting the second data symbol using a second diversity branch.

According to the further embodiment, the transmitter further comprises table means for pre-storing the first and second signal constellation patterns.

According to the further embodiment, the transmitter further comprises an interleaver and/or inverter to obtain different signal constellation patterns.

According to the further embodiment, the transmitter further comprises a forward error correction (FEC) encoder for encoding the data prior to modulation.

According to an illustrative embodiment of the present invention, a receiver for an ARQ (re-) transmission method as part of a wireless communication system comprises receiving means for receiving a first and second data symbol respectively modulated using a first and second signal constellation pattern and transmitted over a first and second diversity branch, and a demapping unit for demodulating the first and second received data symbols using the first and second signal constellation pattern respectively, and a combining unit for diversity combining the demodulated data.

According to the further embodiment, the receiver further comprises a memory means for storing received data prior to combining same.

According to the further embodiment, the receiver further comprises a forward error correction (FEC) decoder for decoding the combined first and second data after diversity combining.

**Claims**

1. An ARQ transmission method in a wireless communication system wherein data packets are transmitted from a transmitter to a receiver, using a first transmission and a second transmission based on a repeat request comprising the steps of modulating said data packets at the transmitter using a first mapping to obtain first data symbols, modulating said data packets at the transmitter using a second mapping to obtain second data symbols, performing the first transmission by transmitting the first data symbols and the second data symbols over a plurality of diversity branches to the receiver, performing the second transmission by transmitting third data symbols after modulation of said data packets using a third mapping and fourth data symbols after modulation of said data packets using a fourth mapping, over the plurality of diversity branches to the receiver, demodulating the received data packets at the receiver using the first to fourth mapping respectively, and diversity combining the demodulated data packets received over the plurality of diversity branches.

2. A transmitter for an ARQ transmission of data packets using a first transmission and a second transmission based on a repeat request received from a receiver (20), comprising:

   a mapping unit for modulating said data packets using a first mapping to obtain first data symbols and for modulating said data packets using a second mapping to obtain second data symbols, a transmission unit for performing the first transmission by transmitting the first data symbols and the second data symbols over a plurality of diversity branches, wherein the transmission unit (30) performs the second transmission by transmitting third data symbols after modulation of said data packets using a third mapping and fourth data symbols after modulation of said data packets using a fourth mapping, over the plurality of diversity branches.

3. The transmitter according to claim 2, further comprising an encoder (12) for encoding data bits using a forward error correction scheme prior to modulation.

4. The transmitter according to claim 3, wherein employed encoding scheme is a Turbo coding scheme.

5. The transmitter according to one of claims 2 to 4, wherein the mapping unit (13) employs a higher order modulation scheme such as M-PSK, M-QAM with log2 (M) > 2 wherein the data bits mapped onto the data symbols have different bit reliabilities depending on the chosen mapping.

6. The transmitter according to one of claims 2 to 5, wherein the modulation scheme is 16 QAM and a number of log2 (M) mappings are used.

7. The transmitter according to one of claims 2 to 6, wherein the mappings for the plurality of diversity branches are selected such that the differences in magnitude among the combined bit reliabilities are reduced after a bit combining of the data packets.

8. The transmitter according to one of claims 2 to 7, further comprising a memory (15) for pre-storing the first to third mapping.

9. The transmitter according to one of claims 2 to 8, wherein the used mappings are signaled to the receiver.

10. The transmitter according to one of claims 3 to 9, wherein the transmission unit (30) transmits the data bits with a plurality of combination indicators indicating a specific combination of systematic and parity bits generated from an encoder (12) .

11. A receiver for an ARQ reception of data packets using a first reception and a second reception based on a repeat request from the receiver (20) comprising:

a reception unit (35) for performing the first reception by receiving said data packets modulated using a first mapping and a second mapping over a plurality of diversity branches, **characterized in that**,
wherein the reception unit (35) performs the second reception by receiving said data packets modulated using a third mapping and a fourth mapping over the plurality diversity branches,
a demapping unit (21) for demodulating the received data packets using the first to fourth mapping respectively, and
a combining unit (23) for diversity combining the demodulated data packets.

12. The receiver according to claim 11, further comprising a decoder (24) for decoding the combined data symbols using a forward error correction scheme after diversity combining.

13. An ARQ transmission method of data packets using a first transmission and a second transmission based on a repeat request received from a receiver, comprising:

modulating said data packets using a first mapping to obtain first data symbols,
modulating said data packets using a second mapping to obtain second data symbols,
performing the first transmission by transmitting the first data symbols and the second data symbols over a plurality of diversity branches to the receiver,
**characterized in that**,
performing the second transmission by transmitting third data symbols after modulation of said data packets using a third mapping and fourth data symbols after modulation of said data packets using a fourth mapping, over at least one of the plurality of diversity branches to the receiver.

14. An ARQ reception method of data packets using a first reception and a second reception based on a repeat request from the receiver comprising:

performing the first reception by receiving said data packets modulated using a first mapping and a second mapping over a plurality of diversity branches, **characterized in that**,
performing the second reception by receiving said data packets modulated using a third mapping and a fourth mapping over the plurality diversity branches,
demodulating the received data packets using the first to fourth mapping respectively, and
diversity combining the demodulated data packets.

Mapping 1 (bit-mapping order: $i_1 q_1 i_2 q_2$)

FIG. 1

Mapping 2 (bit-mapping order: $i_1 q_1 i_2 q_2$)

FIG. 2

Mapping 3 (bit-mapping order: $i_1 q_1 i_2 q_2$)

Mapping 4 (bit-mapping order: $i_1 q_1 i_2 q_2$)

FIG. 3

EP 2 259 478 A1

FIG. 4

bits

m   bits/symbol → symbol

13

pattern # 0
pattern # 1
pattern # 2
.
.
.
pattern # n

HARQ transmission #
diversity branch   #

15

FIG. 5

EP 2 259 478 A1

**EUROPEAN SEARCH REPORT**

Application Number

EP 10 17 8455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WENGERTER CH ET AL: "Advanced hybrid ARQ technique employing a signal constellation rearrangement" VTC 2002-FALL. 2002 IEEE 56TH. VEHICULAR TECHNOLOGY CONFERENCE PROCEEDINGS. VANCOUVER, CANADA, SEPT. 24 - 28, 2002; [IEEE VEHICULAR TECHNOLGY CONFERENCE], NEW YORK, NY : IEEE, US, vol. 4, 24 September 2002 (2002-09-24), pages 2002-2006, XP010608782 ISBN: 978-0-7803-7467-6 * the whole document * | 1-14 | INV. H04L1/18 H04L27/34 |
| A | EP 0 735 701 A (AT & T CORP [US]) 2 October 1996 (1996-10-02) * abstract * * column 2, line 28 - line 41 * * column 8, line 13 - column 12, line 25 * | 1-14 | |
| A | "Enhanced HARQ Method with Signal Constellation Rearrangement" TSG-RAN WORKING GROUP 1 MEETING, XX, XX, 27 February 2001 (2001-02-27), XP002229383 * page 1 * | 1-14 | TECHNICAL FIELDS SEARCHED (IPC) H04L |
| A | US 2002/036980 A1 (LUNDBY STEIN S [US] ET AL LUNDBY STEIN A [US] ET AL) 28 March 2002 (2002-03-28) * abstract * * paragraph [0003] * * paragraph [0005] * * paragraph [0007] * | 1-14 | |

-/--

The present search report has been drawn up for all claims

| Place of search | Date of completion of the search | Examiner |
|---|---|---|
| The Hague | 6 October 2010 | Reilly, Declan |

EP 2 259 478 A1

**EUROPEAN SEARCH REPORT**

Application Number

EP 10 17 8455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AIK CHINDAPOL ET AL: "Bit-interleaved coded modulation with signal space diversity in Rayleigh fading" SIGNALS, SYSTEMS, AND COMPUTERS, 1999. CONFERENCE RECORD OF THE THIRTY 19991024; 19991024 - 19991027 PISCATAWAY, NJ, USA,IEEE, US, vol. 2, 24 October 1999 (1999-10-24), pages 1003-1007, XP010373787 ISBN: 978-0-7803-5700-6 * the whole document * ----- | 1-14 | |

TECHNICAL FIELDS
SEARCHED       (IPC)

The present search report has been drawn up for all claims

| Place of search | Date of completion of the search | Examiner |
|---|---|---|
| The Hague | 6 October 2010 | Reilly, Declan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 17 8455

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2010

| Patent document cited in search report | | Publication date | Patent family member(s) | | Publication date |
|---|---|---|---|---|---|
| EP 0735701 | A | 02-10-1996 | CA | 2172320 A1 | 01-10-1996 |
| | | | US | 5689439 A | 18-11-1997 |
| US 2002036980 | A1 | 28-03-2002 | AT | 371304 T | 15-09-2007 |
| | | | AU | 774761 B2 | 08-07-2004 |
| | | | AU | 4235600 A | 02-11-2000 |
| | | | BR | 0009766 A | 05-03-2002 |
| | | | CA | 2369959 A1 | 26-10-2000 |
| | | | CN | 1346548 A | 24-04-2002 |
| | | | DE | 60036099 T2 | 21-05-2008 |
| | | | EP | 1169790 A1 | 09-01-2002 |
| | | | HK | 1042997 A1 | 22-07-2005 |
| | | | IL | 145694 A | 04-07-2007 |
| | | | IL | 182059 A | 20-07-2009 |
| | | | JP | 2002542713 T | 10-12-2002 |
| | | | KR | 20060132051 A | 20-12-2006 |
| | | | MX | PA01010401 A | 06-05-2002 |
| | | | NO | 20014975 A | 04-12-2001 |
| | | | UA | 66408 C2 | 15-01-2002 |
| | | | WO | 0064073 A1 | 26-10-2000 |
| | | | US | 6356528 B1 | 12-03-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 01127244 A

**Non-patent literature cited in the description**

- **S. Le Goff ; A. Glavieux ; C. Berrou.** Turbo-Codes and High Spectral Efficiency Modulation. *IEEE SUPERCOMM/ICC '94,* 1994, vol. 2, 645-649

- **Ch. Wengerter ; A. Golitschek Edler ; von Elbwart, E. Seidel ; G. Velev ; M.P. Schmitt.** Advanced Hybrid ARQ Technique Employing a Signal Constellation Rearrangement. *IEEE Proceedings of VTC 2002 Fall,* 2002